# DEMANDE DE BREVET EUROPEEN

(11) **EP 4 600 054 A1**
(43) Date de publication de la demande: **13.08.2025**
(21) Numéro de dépôt: 25154929.1
(22) Date de dépôt: 30.01.2025
(51) Int. Cl.: B60G 15/06, F16F 9/54, F16F 1/373

(54) **BLOC FILTRANT D'UNE JAMBE DE FORCE D'UN SYSTÈME DE SUSPENSION DE VÉHICULE AUTOMOBILE**

(30) Priorité: 06.02.2024 FR 2401169
(71) Demandeur: Renault s.a.s, 92100 Boulogne Billancourt (FR)
(72) Inventeur: ANGELINI, Jerome, 78280 GUYANCOURT (FR); FAUQUEUX, Olivier, 78280 GUYANCOURT (FR); PICQUENOT, Maxime, 78280 GUYANCOURT (FR); TERRIEN, Sylvain, 72000 LE MANS (FR)

(57) **Abrégé**

Bloc filtrant (20) d'une jambe de force (1) d'un système de suspension de véhicule automobile, ledit bloc filtrant (20) étant configuré pour supporter et filtrer des types de contraintes à composante axiale et à composante radiale, caractérisé en ce qu'il comporte une première portion annulaire filtrante (24) qui forme une portion centrale du bloc filtrant et une deuxième portion annulaire filtrante (26) distincte qui forme une portion externe du bloc filtrant, lesdites portions annulaires filtrantes (24, 26) étant séparées radialement l'une de l'autre, par un insert annulaire (28) interposé entre elles, pour permettre aux portions annulaires filtrantes de respectivement traiter principalement l'un des types de contraintes.

## Description

La présente invention concerne le domaine des dispositifs de suspension pour véhicules automobiles. La présente invention concerne plus particulièrement le domaine des jambes de force et leur partie supérieure reliée à la structure du véhicule, et les blocs filtrants qui équipent ces jambes de force.

Une jambe de force est un élément structurel majeur d'un système de suspension équipant un véhicule automobile, qui permet aussi bien d'assurer la hauteur de caisse que de limiter les courses de débattement d'une roue du véhicule afin de garantir un confort optimal pour les passagers du véhicule.

Une jambe de force comporte notamment un amortisseur et un ressort hélicoïdal. L'amortisseur comporte un cylindre et une tige montée télescopique dans ce cylindre. La tige d'amortisseur est susceptible de coulisser selon une course axiale maximale déterminée. Le ressort hélicoïdal est agencé coaxialement au cylindre de l'amortisseur.

Une jambe de force est, dans une partie supérieure de jambe de force, liée au châssis du véhicule automobile et elle présente à son extrémité opposée, ou extrémité inférieure, des moyens de liaison à une roue du véhicule automobile, par exemple par l'intermédiaire d'un porte-fusée. L'extrémité libre de la tige participe à former cette partie supérieure de la jambe de force et elle est donc destinée à être liée à un élément structurel du véhicule, et un bloc filtrant est interposé entre cette extrémité libre de la tige et la structure de caisse du véhicule sur lequel est montée la jambe de force.

Sur certains véhicules, et notamment ceux équipés d'un train de type MacPherson, le bloc filtrant assurant la liaison de la jambe de force avec la caisse remplit une fonction de filtration des vibrations solidiennes qui remontent de la roue vers la caisse.

Parmi ces blocs filtrants, il existe notamment une technologie de bloc filtrant porteur et une technologie de bloc filtrant non porteur qui se distinguent l'une de l'autre par la diversité des efforts supportés par le bloc filtrant et le caoutchouc qui participe à le former. Le bloc filtrant porteur, avec le ressort hélicoïdal d'amortisseur qui est précontraint entre une coupelle inférieure fixée au cylindre de l'amortisseur et une coupelle supérieure, ou coupelle ressort, fixée à l'extrémité supérieure de la tige d'amortisseur, et avec un caoutchouc de bloc filtrant qui est interposé entre la coupelle ressort, la tige d'amortisseur et la structure du véhicule, est la technologie permettant d'envisager d'assurer la meilleure filtration globale, les vibrations solidiennes qui remontent de la roue vers la caisse transitant tout aussi bien par les ressorts que par les amortisseurs.

Toutefois, le bloc filtrant porteur dans sa construction actuelle ne permet pas d'atteindre un bon niveau de filtration des vibrations à composantes radiales car la configuration et la position du caoutchouc sont telles que celui-ci doit être assez souple pour filtrer les vibrations solidiennes tout en étant sollicités par des efforts verticaux générés par le poids de la voiture qui transitent par le ressort et la coupelle ressort.

Or, l'effort vertical important issu du poids du véhicule précontraint le caoutchouc et crée un phénomène de rigidification du bloc caoutchouc, de sorte que celui-ci peut ne plus être assez souple par ailleurs pour assurer la filtration de vibrations à composante axiale ou à composante radiale.

La présente invention s'inscrit dans ce contexte et vise à proposer un bloc filtrant d'une jambe de force d'un système de suspension de véhicule automobile, ledit bloc filtrant étant configuré pour supporter et filtrer des types de contraintes à composante axiale et à composante radiale,
caractérisé en ce qu'il comporte une première portion annulaire filtrante qui forme une portion centrale du bloc filtrant et une deuxième portion annulaire filtrante distincte qui forme une portion externe du bloc filtrant, lesdites portions annulaires filtrantes étant séparées radialement l'une de l'autre, par un insert annulaire interposé entre elles, pour permettre aux portions annulaires filtrantes de respectivement traiter principalement l'un des types de contraintes.

De la sorte, les inventeurs ont imaginé une nouvelle conception de blocs filtrants porteurs dans lequel la portion filtrante, réalisée notamment en caoutchouc, n'est plus réalisé avec un unique bloc de matière, de sorte que l'on évite que l'effort vertical du poids du véhicule qui est supporté par le bloc filtrant porteur génère une rigidification de l'ensemble du bloc de matière, et notamment de caoutchouc.

On s'assure qu'une partie de la matière de la portion filtrante reste souple, non précontrainte sous l'effet du poids du véhicule. On évite que la matière, notamment le caoutchouc, formant le bloc filtrant porteur se rigidifie dans son ensemble et qu'il ne soit plus capable de filtrer des vibrations données et de participer au confort vibratoire et acoustique pour les occupants du véhicule. L'aptitude à bien filtrer les vibrations d'un caoutchouc résidant dans une raideur faible, il est particulièrement avantageux de préserver selon l'invention une portion de caoutchouc non précontrainte par le poids du véhicule et apte à filtrer des vibrations notamment à composante radiale.

Dans l'invention, les inventeurs ont ainsi cherché à découpler, au sens de la filtration des efforts, la partie de caoutchouc qui coopère avec le ressort et par laquelle transite l'effort vertical dû au poids du véhicule, de la partie de caoutchouc qui sert à faire la filtration des efforts radiaux transmis par la tige d'amortisseur et par le ressort vers la caisse. En d'autres termes, le bloc filtrant selon l'invention permet une séparation radiale de deux portions filtrantes, notamment en caoutchouc, de sorte que les efforts axiaux qui précontraignent fortement une portion de caoutchouc n'impactent pas l'autre portion de caoutchouc et que cette dernière puisse rester souple et apte à filtrer les vibrations solidiennes passant par elle.

Dans le bloc filtrant selon l'invention, les portions annulaires filtrantes distinctes sont destinées à être disposées autour d'une extrémité libre d'une tige d'amortisseur de la jambe de force, de manière concentrique ou coaxiale, les notions d'axialité et de radialité étant définies par rapport à un axe de révolution du bloc filtrant, correspondant à l'axe d'allongement de cette tige d'amortisseur.

Selon une caractéristique optionnelle de l'invention, l'insert annulaire comprend une bague annulaire plane qui comporte un bord périphérique interne sur lequel la première portion annulaire filtrante est en prise et un bord périphérique externe sur lequel la deuxième portion annulaire filtrante est en prise, l'insert annulaire comportant une portion dégagée, qui n'est recouverte ni par la première portion annulaire filtrante ni par la deuxième portion annulaire filtrante.

La présence de la portion dégagée permet d'assurer que la matière utilisée pour réaliser la portion filtrante, notamment le caoutchouc, soit bien réparti en deux portions distinctes, qui peuvent être précontraintes différemment l'une de l'autre. Et l'agencement radial de l'insert annulaire entre les portions annulaires filtrantes rend possible le fait que d'une part des efforts radiaux soient transmis d'une portion à l'autre, et donc que la globalité de la matière du bloc filtrant puisse participer à l'absorption des vibrations correspondant à ces efforts radiaux, et d'autre part que des efforts axiaux ne soient pas transmis et d'une portion annulaire filtrante à l'autre, et donc que seule l'une des portions filtrantes annulaires est contrainte par le poids du véhicule.

Selon une caractéristique optionnelle de l'invention, les portions annulaires filtrantes sont surmoulées sur l'insert annulaire. On s'assure ainsi la tenue de l'insert entre les portions annulaires filtrantes, et on s'assure de la bonne transmission des efforts entre une portion annulaire filtrante et l'insert annulaire.

Selon une caractéristique optionnelle de l'invention, l'insert annulaire est réalisé en matériau métallique, composite ou plastique.

Selon une caractéristique optionnelle de l'invention, la première portion annulaire filtrante et/ou la deuxième portion annulaire filtrante sont réalisées en caoutchouc.

Selon une caractéristique optionnelle de l'invention, les deux portions annulaires filtrantes présentent des caractéristiques de raideur différentes l'une de l'autre. On profite ainsi de l'intérêt de la séparation des portions annulaires filtrantes. Selon les efforts à encaisser par les portions annulaires filtrantes, on peut régler la dureté de chacune de ces portions annulaires filtrantes.

Selon une caractéristique optionnelle de l'invention, la deuxième portion annulaire filtrante présente une raideur de valeur supérieure à la valeur de raideur de la première portion annulaire filtrante. En d'autres termes, la portion annulaire filtrante qui est agencée en travers de la remontée des efforts axiaux dus au poids du véhicule, par l'intermédiaire du ressort d'amortisseur, est prévue à l'origine avec une dureté plus grande que l'autre portion annulaire filtrante, afin qu'elle puisse encaisser plus d'efforts et afin que l'autre portion annulaire filtrante, plus souple, puisse absorber efficacement les autres efforts, essentiellement radiaux, générés par l'amortisseur.

Selon une caractéristique optionnelle de l'invention, la deuxième portion annulaire filtrante présente une face supérieure d'extrémité axiale sensiblement plane et une face inférieure d'extrémité axiale équipée d'un plot d'amortissement.

Selon une caractéristique optionnelle de l'invention, le plot d'amortissement présente une forme sensiblement tronconique, avec une section, dans un plan parallèle au plan de la face supérieure d'extrémité axiale de la deuxième portion annulaire filtrante, qui tend à se réduire au fur et à mesure que l'on s'éloigne de cette face supérieure d'extrémité axiale.

Tel qu'il vient d'être décrit, le plot d'amortissement est plus haut que large pour bien supporter les efforts axiaux importants venant du ressort tout en étant peu raide sous effort radial pour ne pas apporter trop de raideur qui pourrait nuire à la bonne filtration des vibrations radiales remontant vers la caisse du véhicule.

Selon une caractéristique optionnelle de l'invention, le plot d'amortissement présente une dimension axiale plus importante que sa dimension radiale.

Selon une caractéristique optionnelle de l'invention, le bloc filtrant comporte un insert tubulaire, lié à la matière de la première portion annulaire filtrante au voisinage d'une bordure interne de cette première portion annulaire filtrante. Notamment, la première portion annulaire filtrante est surmoulée sur l'insert tubulaire.

Selon une caractéristique optionnelle de l'invention, l'insert tubulaire est réalisé en matériau métallique, composite ou plastique.

Selon une caractéristique optionnelle de l'invention, la première portion annulaire présente deux faces d'extrémité axiale sensiblement planes et l'insert tubulaire dépasse axialement de chacune des deux faces d'extrémité axiale. L'insert tubulaire est au contact des éléments structurels du véhicule pour participer à la remontée des efforts axiaux par l'intermédiaire de la tige d'amortisseur, la première portion annulaire étant elle libre de contact axiaux. Ceci est notamment intéressant dans le contexte où cette première portion annulaire filtrante est destinée à filtrer les vibrations à composante radiale sans avoir à supporter des efforts axiaux risquant de modifier sa dureté lors du roulage du véhicule.

L'invention concerne également une jambe de force d'un système de suspension de véhicule automobile comportant au moins un amortisseur et un ressort hélicoïdal agencé autour de l'amortisseur, ledit amortisseur comportant un cylindre et une tige montée télescopique dans ce cylindre et dont l'extrémité libre coopère avec un bloc filtrant tel que précédemment évoqué, ledit bloc filtrant étant interposé entre l'amortisseur et la caisse du véhicule.

Selon une caractéristique optionnelle de l'invention, le bloc filtrant est en appui sur une coupelle de réception du ressort hélicoïdal, uniquement par l'intermédiaire de la deuxième portion annulaire filtrante. De la sorte, la remontée des efforts dus au poids du véhicule, remontant axialement par le ressort hélicoïdal, est assurée par l'intermédiaire de la deuxième portion annulaire filtrante, la séparation radiale des portions annulaires au sein du bloc filtrant permettant à la première portion annulaire filtrante de ne pas être impactée par cette remontée d'efforts axiaux.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig.1] est une vue schématique de côté du véhicule équipé d'une jambe de force selon un aspect de l'invention ;
[Fig.2] représente schématiquement une portion supérieure d'une jambe de force destinée à être fixée à un véhicule automobile, ladite figure 2 rendant visible la structure d'un bloc filtrant équipant selon un aspect de l'invention ;
[Fig.3] représente le bloc filtrant de la figure 2 dans une vue en perspective.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « axial » et « radial » sont relatives à l'axe d'allongement de l'amortisseur équipant la jambe de force, la dénomination « axial » étant relative à une orientation parallèle à cet axe d'allongement tandis que la dénomination « radial » est relative à une orientation perpendiculaire à cet axe d'allongement et passant par cet axe d'allongement.

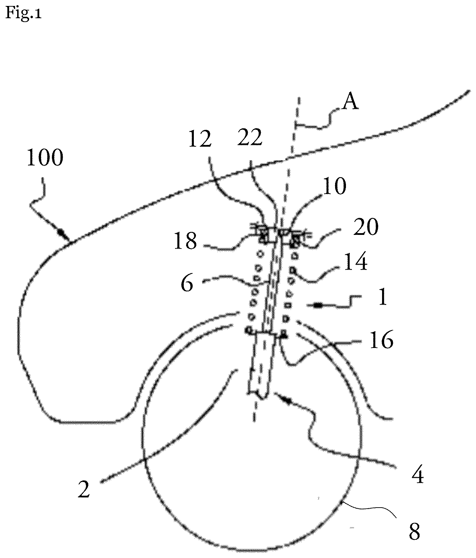

On a représenté à la figure 1 l'avant d'un véhicule automobile 100 vu de côté et une jambe de force 1, ici à l'avant gauche du véhicule, formant partie d'un système de suspension du véhicule. Il convient de noter que tout ce qui va être décrit pour cette jambe de force peut s'appliquer à chacun des deux côtés d'un train de roues du véhicule.

La jambe de force 1 comporte un amortisseur 2 d'axe d'allongement A comprenant un cylindre 4 dans lequel une tige 6 est montée télescopique axialement selon l'axe d'allongement A. Une extrémité inférieure du cylindre 4 est liée avec une roue 8 directrice associée du véhicule, par exemple par l'intermédiaire d'une chape ici non illustrée, tandis que l'extrémité supérieure libre 10 de la tige 6 est destinée à être liée à un élément structurel 12 du véhicule, tel qu'un élément de carrosserie. La tige 6 prend plus particulièrement la forme d'un piston se déplaçant selon l'axe d'allongement A sous la contrainte d'efforts de compression et de détente, transmis par les roues du véhicule au contact de la route.

La jambe de force 1 est aussi équipée d'un ressort 14 hélicoïdal de suspension qui permet d'absorber élastiquement les chocs. Le ressort 14 est disposé autour de la tige d'amortisseur 6. Le ressort 14 est monté contraint entre une coupelle inférieure 16 et une coupelle supérieure 18. La coupelle inférieure 16 est ici fixée au cylindre 4 de l'amortisseur 2, tandis que la coupelle supérieure 18 est portée par l'élément structurel 12 du véhicule.

La jambe de force 1 comporte par ailleurs un bloc filtrant 20 qui est agencé autour de l'extrémité supérieure libre 10 de la tige 6 et qui est par ailleurs interposé entre l'élément structurel 12 et la coupelle supérieure 18. Ce bloc filtrant 20 a notamment pour fonction d'absorber certaines vibrations de la tige 6 pour éviter qu'elles ne soient transmises à la structure du véhicule, par exemple pour éviter l'apparition de bruits parasites.

La jambe de force 1 est particulière selon l'invention, tel que cela va être décrit plus en détails ci-après, notamment dans la configuration du bloc filtrant 20 équipant cette jambe de force. Plus particulièrement, le bloc filtrant 20 comporte deux portions filtrantes spécifiques qui sont découplées, ou séparées, l'une de l'autre, afin que l'une de ces portions filtrantes puisse notamment absorber les efforts axiaux générés par le poids du véhicule, par la compression axiale de la tige 6 et du ressort hélicoïdal 14 et afin que l'autre de ces portions filtrantes puisse plus particulièrement absorber les efforts radiaux notamment générés par le ressort hélicoïdal 14.

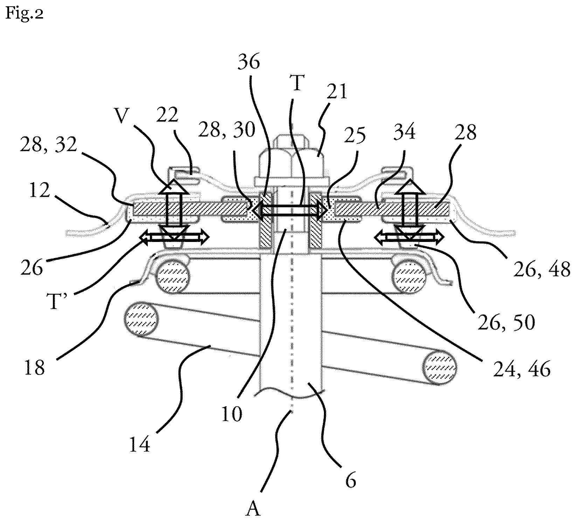

La figure 2 illustre schématiquement une vue de coupe de la partie supérieure de la jambe de force 1 selon l'invention. La figure 2 rend plus particulièrement visible la tige 6 d'amortisseur et le ressort hélicoïdal 14, s'étendant selon l'axe d'allongement A de l'amortisseur, ainsi que différents composants de la partie supérieure de la jambe de force 1, ainsi que le bloc filtrant 20.

Tel que cela a été évoqué précédemment, le ressort 14 hélicoïdal est au contact, au niveau d'une spire supérieure, de la coupelle supérieure 18, et plus particulièrement d'une première face de cette coupelle supérieure 18, et cette coupelle supérieure 18 est liée, via une deuxième face opposée à la première face, à une portion annulaire du bloc filtrant 20.

Le bloc filtrant 20 est interposé entre cette coupelle ressort, ou coupelle supérieure 18, et l'élément structurel 12 du véhicule et va être décrit plus en détails ci-après.

L'extrémité libre 10 de la tige 6 s'étend au-delà du bloc filtrant 20 pour coopérer avec un écrou 21, dont le serrage sur une portion filetée de l'extrémité libre 10 de la tige 6 permet d'enserrer une coupelle de rebond 22 et de lier ainsi la tige 6 d'amortisseur à la structure du véhicule.

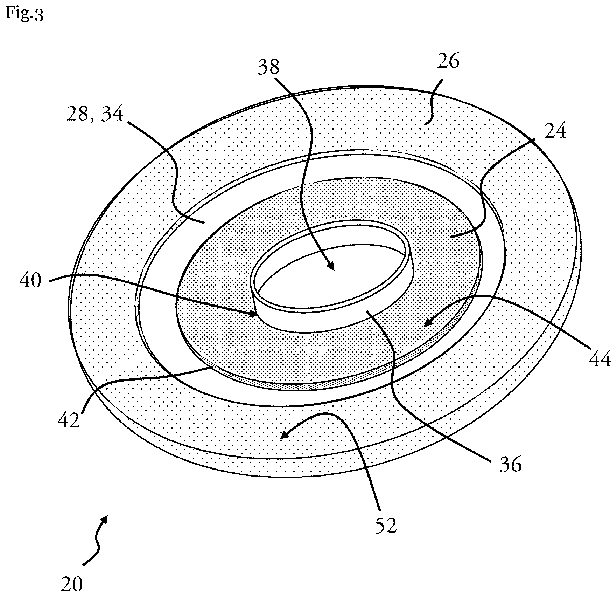

Le bloc filtrant 20 selon l'invention comporte deux portions annulaires filtrantes 24, 26 et un insert annulaire 28 qui sépare radialement ces deux portions filtrantes. Il va être décrit en référence à la figure 2, qui illustre plus particulièrement sa coopération avec les autres composants de la jambe de force, et en référence à la figure 3, qui illustre le bloc filtrant seul.

Les deux portions annulaires filtrantes consistent en une première portion annulaire filtrante 24 et une deuxième portion annulaire filtrante 26, distincte de la première portion annulaire filtrante 24. L'insert annulaire 28 est lié aussi bien avec la première portion annulaire filtrante 24 qu'avec la deuxième portion annulaire filtrante 26. Plus particulièrement, les deux portions annulaires filtrantes 24, 26 sont disposées de manière concentrique autour de l'extrémité libre 10 de la tige 6, en étant séparées radialement l'une de l'autre par l'insert annulaire 28 interposé entre elles.

On définit la première portion annulaire filtrante 24 comme étant celle agencée au plus proche de la tige 6 et la deuxième portion annulaire filtrante 26 comme étant celle disposée autour de la première portion annulaire filtrante 24, à distance de l'axe d'allongement de la tige 6.

Les deux portions annulaires filtrantes 24, 26 sont surmoulées sur l'insert annulaire 28, respectivement à une extrémité radiale de celui-ci.

L'insert annulaire 28 comprend une bague annulaire plane, c'est-à-dire une pièce de révolution dont l'épaisseur axiale est bien plus petite que sa dimension radiale. L'insert annulaire 28 comporte un bord périphérique interne 30 qui délimite une ouverture centrale et sur lequel la première portion annulaire filtrante 24 est en prise et un bord périphérique externe 32 sur lequel la deuxième portion annulaire filtrante 26 est en prise.

L'insert annulaire 28 comporte une portion annulaire intermédiaire, à distance du bord périphérique interne 30 et du bord périphérique externe 32, qui forme une portion centrale dégagée 34, qui n'est recouverte ni par la première portion annulaire filtrante 24 ni par la deuxième portion annulaire filtrante 26.

La portion distale de l'insert annulaire 28, c'est-à-dire la portion la plus éloignée de l'axe d'allongement A de l'amortisseur, est la portion noyée dans la deuxième portion annulaire filtrante 26 et elle s'étend radialement sur une plus grande distance qu'une portion proximale de l'insert annulaire correspondant à la portion de cet insert annulaire 28 qui est noyée dans la première portion annulaire filtrante 24. Cela permet, tel qu'illustré sur la figure 2 et tel qu'expliqué ci-après, d'être axialement en recouvrement de la zone de contact de la dernière spire du ressort hélicoïdal avec la coupelle supérieure 18, contre laquelle la deuxième portion annulaire filtrante 26 est également en appui.

Dans l'exemple illustré, sans que cela soit limitatif de l'invention, cette portion proximale de l'insert annulaire, noyée dans la première portion annulaire filtrante 24, est sensiblement de même dimension radiale que la dimension radiale de la portion centrale dégagée 34, non recouverte par l'une des portions annulaires filtrantes 24, 26.

Par ailleurs, le bloc filtrant 20 comporte un insert tubulaire 36 qui est lui uniquement lié à la première portion annulaire filtrante 24.

Indépendamment de l'orientation de l'axe d'allongement de la tige 6 d'amortisseur par rapport à la route sur laquelle repose le véhicule, l'insert annulaire 28 s'étend principalement dans un plan perpendiculaire à l'axe d'allongement A de l'amortisseur tandis que l'insert tubulaire 36 s'étend parallèlement à cet axe d'allongement. Dans la suite de la description, il sera fait mention d'une orientation verticale de l'insert tubulaire 36 et d'une orientation horizontale de l'insert annulaire 28, résultantes d'une orientation arbitraire verticale de l'axe d'allongement A de l'amortisseur.

La première portion annulaire filtrante 24 est une portion centrale du bloc filtrant 20 avec une ouverture 38 à travers laquelle passe l'extrémité libre 10 de la tige 6 d'amortisseur. Cette ouverture est délimitée par une première surface de l'insert tubulaire 36. La deuxième surface, opposée à la première surface, de l'insert tubulaire 36 est liée à une bordure interne 40, référencée sur la figure 3, de la première portion annulaire filtrante 24. A l'extrémité radiale opposée, la première portion annulaire filtrante 24 présente une bordure externe 42, également référencée sur la figure 3, qui est en prise autour d'une extrémité radiale de l'insert annulaire 28, à savoir son bord périphérique interne.

La première portion annulaire filtrante 24 est sensiblement plane, dans la mesure où elle présente deux faces d'extrémité axiales, respectivement perpendiculaires aux bordures interne 40 et externe 42, qui sont planes. Une première face d'extrémité axiale 44, visible sur la figure 3, est plane et une deuxième face d'extrémité axiale 46, référencée sur la figure 2, est sensiblement parallèle à cette première face d'extrémité axiale, la distance entre les deux faces, définissant la hauteur de la première portion annulaire filtrante 24, étant constante.

L'insert tubulaire 36 est en prise dans la matière de la première portion annulaire filtrante 24, au voisinage de la bordure interne 40. Plus particulièrement, la première portion annulaire filtrante 24 est surmoulée sur l'insert tubulaire 36.

Tel que visible sur la figure 2, du fait de la présence de deux inserts associés à la première portion annulaire filtrante 24, on peut distinguer au sein de celle-ci une portion périphérique qui est en prise autour de l'insert annulaire 28 et une portion centrale 25 qui est interposée entre l'insert tubulaire 36 et le bord périphérique interne 30 de l'insert annulaire 28. Tel que cela sera détaillé ci-après, cette portion centrale 25 est apte à être contrainte radialement entre l'insert tubulaire 36 et l'insert annulaire 28.

Tel qu'évoqué, l'insert tubulaire 36 s'étend axialement, c'est-à-dire sensiblement parallèlement à l'axe d'allongement A de l'amortisseur. L'insert tubulaire 36 présente une dimension axiale supérieure à la hauteur correspondante de la première portion annulaire filtrante 24, de sorte que qu'elle déborde axialement de part et d'autre de la première portion annulaire filtrante 24, la figure 3 rendant notamment visible le fait que l'insert tubulaire 36 déborde axialement de la première face d'extrémité axiale 44. Tel que visible sur la figure 2, l'insert tubulaire 36 est à une première extrémité axiale en appui contre la deuxième face de la coupelle ressort, ou coupelle supérieure 18, et à une deuxième extrémité axiale en appui contre la coupelle de rebond 22.

On va maintenant décrire la deuxième portion annulaire filtrante 26 du bloc filtrant 20 qui, telle que précédemment mentionnée, est séparée de la première portion annulaire filtrante 24, avec l'insert annulaire 28 qui est interposé radialement entre ces deux portions annulaires filtrantes.

La deuxième portion annulaire filtrante 26 est enserrée axialement entre l'élément structurel 12 et la coupelle ressort, ou coupelle supérieure 18.

La deuxième portion annulaire filtrante 26 comporte une base 48 sensiblement plane, au sein de laquelle est noyé l'insert annulaire 28, et un plot d'amortissement 50 qui fait saillie de la base 48, en direction de la coupelle supérieure 18.

La base 48 présente une forme sensiblement similaire à celle de la première portion annulaire filtrante 24, avec une face supérieure d'extrémité axiale 52 de la deuxième portion annulaire filtrante 26, formée par la base 48 et destinée à être au contact de l'élément structurel 12, qui est sensiblement plane, tel que visible sur les figures et référencée sur la figure 3.

Le plot d'amortissement 50 s'étend en saillie de la base 48 pour définir une surface de contact restreinte avec la coupelle ressort, ou coupelle supérieure 18. Le plot d'amortissement 50 présente plus particulièrement une forme sensiblement tronconique, avec une section, dans un plan perpendiculaire à l'axe d'allongement, qui tend à diminuer au fur et à mesure qu'on se rapproche de la surface de contact avec la coupelle supérieure 18. Le fait de prévoir une surface de contact réduite permet de s'assurer d'une transmission des efforts axiaux essentiellement. Afin de privilégier la transmission de ces efforts axiaux, il est également notable que le plot d'amortissement 50 présente une dimension axiale plus importante que sa dimension radiale.

Ceci est notamment intéressant dans le contexte de l'invention où on cherche à découpler les deux portions annulaires filtrantes 24, 26 pour que l'une puisse supporter les contraintes axiales dues au poids du véhicule et que l'autre soit apte à amortir et filtrer les vibrations solidiennes remontant vers la caisse par l'intermédiaire de la jambe de force.

Plus particulièrement, la deuxième portion annulaire filtrante 26 est configurée pour essentiellement supporter les contraintes axiales dues au poids du véhicule et la première portion annulaire filtrante 24 est configurée pour uniquement filtrer les vibrations.

La portion de l'insert annulaire 28 noyée dans la deuxième portion annulaire filtrante 26 s'étend axialement en recouvrement du plot d'amortissement 50 de cette deuxième portion annulaire filtrante 26 qui est en contact de la coupelle ressort, ou coupelle supérieure 18. En d'autres termes, si on trace une ligne, parallèle à l'axe de la tige 6 d'amortisseur et passant par un point de contact entre ce plot d'amortissement 50 et la coupelle supérieure 18, cette ligne vient à couper l'insert annulaire 28. De la sorte, l'insert annulaire 28 forme un mur pour comprimer la deuxième portion annulaire filtrante 26 sous efforts axiaux, ici verticaux. La deuxième portion annulaire filtrante 26 est ainsi configurée pour encaisser les chocs et filtrer une partie des vibrations à composante axiale, ou verticale.

Les vibrations à composante radiale sont plus particulièrement absorbées par la première portion annulaire filtrante 24, du fait de la présence de la portion centrale 25 de cette première portion annulaire filtrante 24 qui se retrouve agencée entre le bord périphérique interne 30 de l'insert annulaire 28 et l'insert tubulaire 36. Sous efforts transversaux, cette zone de matière formant la portion centrale 25 est écrasée entre les deux inserts, ce qui pousse à saturation la matière de la première portion annulaire filtrante 24 et ce qui permet donc la filtration de ces efforts radiaux, ou transversaux.

La matière de la première portion annulaire filtrante 24, comme celle de la deuxième portion annulaire filtrante 26, peut notamment être du caoutchouc. Tel que cela est illustré sur les figures 2 et 3, avec une représentation schématique de la matière avec différentes densités de points, les deux portions annulaires filtrantes peuvent être respectivement formés de caoutchouc de différentes raideurs. Notamment la deuxième portion annulaire filtrante 26 peut avantageusement présenter une raideur de valeur supérieure à la valeur de raideur de la première portion annulaire filtrante 24, les efforts axiaux à encaisser étant plus importants que les efforts transversaux.

Chacun des inserts 28, 36 peut être dans une matière métallique qui lui est propre, ou bien être dans une matière composite ou plastique.

Il résulte de ce qui précède, et tel que cela est schématisé sur la figure 2 avec des flèches, que la première portion annulaire filtrante 24 supporte une grande partie des efforts transversaux T sans supporter aucun des efforts verticaux, tandis que la deuxième portion annulaire filtrante 26 supporte l'ensemble des efforts verticaux V et une très petite partie des efforts transversaux T'.

Il est notable que dans le bloc filtrant selon l'invention les efforts verticaux sont essentiellement encaissés par la deuxième portion annulaire filtrante 26, du fait de l'absence de contact axial entre cette dernière et la coupelle de ressort, ou coupelle supérieure 18, et de la séparation radiale des deux portions annulaires filtrantes. Ainsi, la première portion annulaire filtrante 24 est uniquement dédiée à l'encaissement des efforts transversaux et n'est donc pas précontrainte par le poids du véhicule lors du roulage du véhicule, de sorte qu'elle conserve sa souplesse pour le traitement des vibrations solidiennes remontant au niveau de la tige d'extrémité libre de l'amortisseur.

La jambe de force qui vient d'être décrite est plus particulièrement mise en oeuvre dans un train arrière de véhicule automobile, c'est-à-dire un train non directeur, avec un bloc filtrant découplé conforme à ce qui a été décrit. Il pourrait être envisagé d'appliquer une jambe de force, avec un bloc filtrant découplé équivalent à ce qui vient d'être décrit, à un train directeur de véhicule automobile, et notamment un train avant, dans lequel la jambe de force est liée à la caisse par l'intermédiaire d'une bague tournante interposée entre la coupelle supérieure et la caisse, dès lors que cette bague tournante est configurée pour coopérer avec un bloc filtrant à portions découplées conformément à l'invention, avec une zone qui encaisse essentiellement les efforts axiaux et une zone qui encaisse des efforts radiaux sans avoir à encaisser ces efforts axiaux.

L'invention, telle qu'elle vient d'être décrite, atteint bien les buts qu'elle s'était fixée, et permet de proposer un bloc filtrant pour une jambe de force de véhicule automobile qui est capable de séparer la partie de caoutchouc qui sert à porter le véhicule et par lequel transite l'effort vertical des ressorts de la partie de caoutchouc qui sert à faire la filtration des efforts radiaux de ressort. Des variantes non décrites ici pourraient être mises en oeuvre sans sortir du contexte de l'invention, dès lors que, conformément à l'invention, elles comprennent un bloc filtrant avec deux portions annulaires découplées par la présence entre elles d'un insert.

## Revendications

1. Bloc filtrant (20) d'une jambe de force (1) d'un système de suspension de véhicule automobile, ledit bloc filtrant (20) étant configuré pour supporter et filtrer des types de contraintes à composante axiale et à composante radiale, **caractérisé en ce qu'**il comporte une première portion annulaire filtrante (24) qui forme une portion centrale du bloc filtrant et une deuxième portion annulaire filtrante (26) distincte qui forme une portion externe du bloc filtrant, lesdites portions annulaires filtrantes (24, 26) étant séparées radialement l'une de l'autre, par un insert annulaire (28) interposé entre elles, pour permettre aux portions annulaires filtrantes de respectivement traiter principalement l'un des types de contraintes.

2. Bloc filtrant (20) selon la revendication 1, **caractérisé en ce que** l'insert annulaire (28) comprend une bague annulaire plane qui comporte un bord périphérique interne (30) sur lequel la première portion annulaire filtrante (24) est en prise et un bord périphérique externe (32) sur lequel la deuxième portion annulaire filtrante (26) est en prise, l'insert annulaire (28) comportant une portion dégagée (34), qui n'est recouverte ni par la première portion annulaire filtrante (24) ni par la deuxième portion annulaire filtrante (26).

3. Bloc filtrant (20) selon la revendication 1 ou 2, **caractérisé en ce que** les portions annulaires filtrantes (24, 26) sont surmoulées sur l'insert annulaire (28).

4. Bloc filtrant (20) selon l'une des revendications 1 à 3, **caractérisé en ce que** l'insert annulaire (28) est réalisé en matériau métallique, composite ou plastique.

5. Bloc filtrant (20) selon l'une des revendications 1 à 4, **caractérisé en ce que** la première portion annulaire filtrante (24) et/ou la deuxième portion annulaire filtrante (26) sont réalisées en caoutchouc.

6. Bloc filtrant (20) selon l'une des revendications 1 à 5, **caractérisé en ce que** les deux portions annulaires filtrantes (24, 26) présentent des caractéristiques de raideur différentes l'une de l'autre.

7. Bloc filtrant (20) selon la revendication précédente, **caractérisé en ce que** la deuxième portion annulaire filtrante (26) présente une raideur de valeur supérieure à la valeur de raideur de la première portion annulaire filtrante (24).

8. Bloc filtrant (20) selon l'une des revendications 1 à 7, **caractérisé en ce que** la deuxième portion annulaire filtrante (26) présente une face supérieure d'extrémité axiale (52) sensiblement plane et une face inférieure d'extrémité axiale équipée d'un plot d'amortissement (50).

9. Bloc filtrant (20) selon la revendication précédente, **caractérisé en ce que** le plot d'amortissement (50) présente une forme sensiblement tronconique, avec une section, dans un plan parallèle au plan de la face supérieure d'extrémité axiale (52) de la deuxième portion filtrante annulaire (26), qui tend à se réduire au fur et à mesure que l'on s'éloigne de cette face supérieure d'extrémité axiale (52).

10. Bloc filtrant (20) selon l'une des revendications précédentes, **caractérisé en ce qu'**il comporte un insert tubulaire (36), lié à la matière de la première portion annulaire filtrante (24) au voisinage d'une bordure interne (40) de cette première portion annulaire filtrante (24).

11. Jambe de force (1) d'un système de suspension de véhicule automobile comportant au moins un amortisseur (2) et un ressort hélicoïdal (14) agencé autour de l'amortisseur (2), ledit amortisseur comportant un cylindre (4) et une tige (6) montée télescopique dans ce cylindre et dont l'extrémité libre (10) coopère avec un bloc filtrant (20) selon l'une des revendications précédentes, ledit bloc filtrant (20) étant interposé entre l'amortisseur (2) et un élément structurel (12) du véhicule.

12. Jambe de force (1) selon la revendication précédente, **caractérisée en ce que** le bloc filtrant (20) est en appui sur une coupelle (18) de réception du ressort hélicoïdal (14), uniquement par l'intermédiaire de la deuxième portion annulaire filtrante (26).
